Europäisches Patentamt

European Patent Office

Office européen des brevets

(11) Publication number: **0 271 078 B1**

# EUROPEAN PATENT SPECIFICATION

(45) Date of publication of patent specification: **13.05.92**     (51) Int. Cl.⁵: **B29C 51/42**

(21) Application number: **87118230.9**

(22) Date of filing: **09.12.87**

(54) **Thermoforming method and apparatus for thermoplastic resin sheet.**

(30) Priority: **11.12.86 JP 295427/86**

(43) Date of publication of application:
**15.06.88 Bulletin  88/24**

(45) Publication of the grant of the patent:
**13.05.92 Bulletin  92/20**

(84) Designated Contracting States:
**DE FR GB IT**

(56) References cited:
EP-A- 0 191 898         CH-A- 454 433
DE-A- 1 963 573         DE-A- 3 009 981
DE-A- 3 419 494         FR-A- 2 078 575
GB-A- 2 164 601         JP-A- 5 010 362

PATENT ABSTRACTS OF JAPAN, vol. 10, no.
37 (M-453)[2094], 14th February 1986; & JP-
A-60 190 328 (MAMORU KAMO) 27-09-1985

(73) Proprietor: **IDEMITSU PETROCHEMICAL COM-
PANY LIMITED
Kou-841-3, Shirahama-cho
Himeji-shi Hyogo-ken(JP)**

(72) Inventor: **Fujii, Atsushi c/o Idemitsu Petro-
chemical Co. Ltd.
Kou 841-3, Shirahama-cho
Himeji-shi Hyogo-ken(JP)**
Inventor: **Tohya, Osamu c/o Idemitsu Petro-
chemical Co. Ltd.
Kou 841-3, Shirahama-cho
Himeji-shi Hyogo-ken(JP)**
Inventor: **Fukuda, Kazuyuki c/o Idemitsu Pet-
rochemical Co. L
Kou 841-3, Shirahama-cho
Himeji-shi Hyogo-ken(JP)**

(74) Representative: **Hoeger, Stellrecht & Partner
Uhlandstrasse 14 c
W-7000 Stuttgart 1(DE)**

## Description

This invention relates to a thermoforming method and apparatus for a thermoplastic resin sheet, in which the thermoplastic resin sheet is preliminarily heated at a heating section and thereafter thermoformed at a forming section.

Heretofore, there have been known two thermoforming methods for a thermoplastic resin sheet.

A first method is so-called a hot plate-heating pressure forming method in which the heating and the forming of the sheet are carried out at the same stage. A second method is a two-stage forming method in which the sheet is first heated at a heating section and then fed to a forming section to be subjected to thermoforming.

The former method of the two has such advantages that an apparatus for carrying out the method can be formed compact and a thermal efficiency is high, enabling the thermoforming of the sheet effectively in a solid phase at a temperature lower than a melting point of the resin and improving the tranparency of the products. Thus, the first method has been widely employed. However, this method involves a problem that it is not suitable for the forming using a plug and it is impossible to effect deep drawing or forming of heavy-gage sheets.

In contrast, the latter method can use a plug because the forming of the sheet is carried out at another stage than the heating stage of the sheet. Therefore, the second method is generally used for deep-draw forming or forming of heavy-gage sheets.

Thus, the two-stage forming method is employed for the deep-draw forming or the forming of heavy-gage sheets.

Since this conventional two-stage forming method carries out the heating of the sheet and the forming of the sheet at different stages, this method can use a plug and this is especially suited for the deep-draw forming, for example, for forming cups etc. However, especially when the first stage heating is effected by radiation heating, not only the heating efficiency is poor, but also the heating control is difficult, causing undesirable deformation of the sheet or unevenness in heating.

To eliminate these problems involved in the two-stage forming method, the sheet may directly be heated by hot plates at the first stage. In this case, however, the transparency and gloss of the sheet are lowered due to the transfer of the hot plate surface or rain drop (air spots mark) is formed on the sheet due to intervening air between the sheet and the hot plates, or ununiform drawing is caused due to poor thermal conductivity and uneven heating, especially in the forming at a temperature lower than a melting point of the resin. Thus, it is quite difficult to obtain excellent formed products.

To solve these problems, it has been proposed that the sheet is closely contacted with the hot plates with the assistance of a vacuum means and thus the sheet is locally fixed to the hot plates and heated by small area units. The sheet is then fed to a forming section to be subjected to the forming. Such a method has been disclosed, for example, in Japanese Patent Kokai 50-10362 and 60-190328.

The inventors of the present invention have conducted experiments about this method and the results of their experiments have revealed that this method again fails to provide a formed product, which is excellent in transparency and gloss and has a uniform gage, from a crystalline polyolefin mainly formed of polypropylene, or an easily formable sheet having no substantial orientation. Thus, this method can not be employed for preparation of formed products such as packing containers for food or medicine, which require high transparency and gloss and excellent shapability.

It is therefore a primary object of the present invention to provide a thermoforming method and apparatus for a thermoplastic resin sheet which is capable of forming a formed product which is excellent in transparency and gloss and free from gage unevenness and undesirable deformation and which is capable of forming a deep-drawn product or forming of heavy-gage sheets.

The present invention features a thermoforming method for a thermoplastic resin sheet, which is characterized in that the thermoplastic resin sheet is held between upper and lower heating plates having a surface roughness of 2S or less, while being vacuum sucked at least from a side of the upper heating plate, being allowed to closely contact at least said upper heating plate, the sheet is heated at a temperature lower than a melting point of the resin and the sheet is then quickly sent to a forming section to be thermoformed at the sheet forming section.

The present invention further features a thermoforming apparatus for thermoplastic resin sheet which comprises: a sheet heating section including a set of upper and lower heating plates having a surface roughness of 2S or less, at least the upper heating plate having a plurality of vacuum thin bores, and a vacuum system which communicates with said vacuum thin bores; and a sheet forming section which is disposed after said sheet heating section.

With the arrangement as descibed above, the sheet can be heated up to a temperature near a melting point of the resin, while keeping the sheet free from the formation of rain drop (air spots mark) and the sheet can be heated uniformly without causing rough surface transfer because the heating plates have mirror surfaces. This sheet heating enables forming of containers etc. of uniform thickness without spoiling transparency, gloss and shapability.

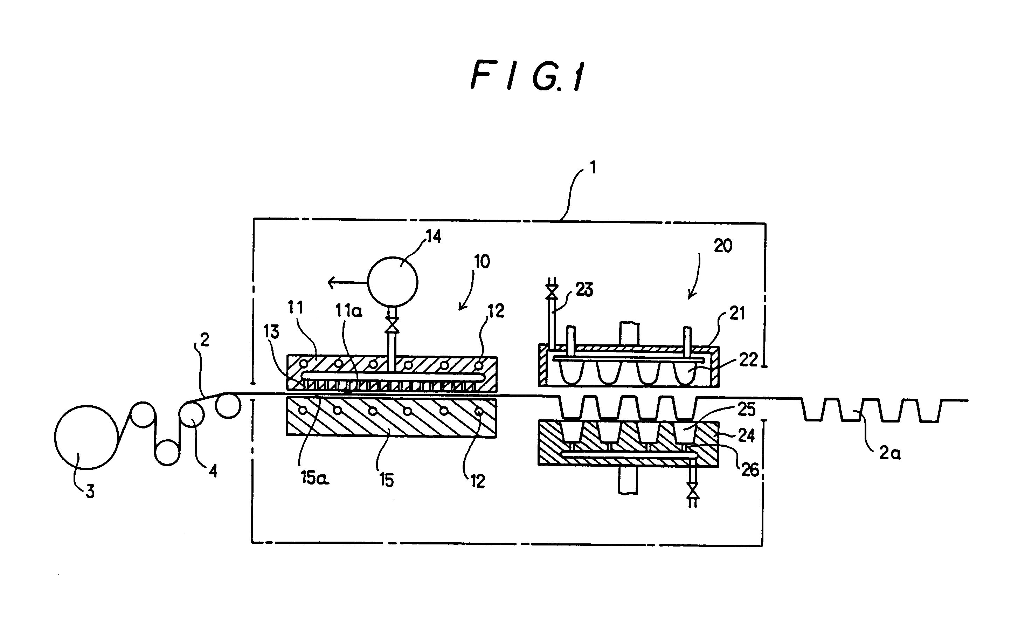

Figure 1 is a schematic view of a thermoforming apparatus of the present invention, showing its principal portions in section.

A thermoforming apparatus 1 according to the present invention is illustrated in Figure 1. The thermoforming apparatus 1 comprises a sheet heating section 10 for heating sheet 2 which is intermittently fed through guide rollers 4 from a delivery roll 3 and a sheet forming section 20 for forming the sheet 2 heated at the sheet heating section 10 into containers 2a by deep drawing. The sheet heating section 10 and the sheet thermoforming section 20 are disposed in a line.

The sheet heating section 10 is formed of an upper heating plate 11 and a lower heating plate 15 which are disposed opposite to each other and adapted to move relatively in a vertical direction with each other so that they may come near to and get away from each other. The upper heating plate 11 has heating sources 12, such as heaters, provided in it and a number of vacuum thin bores 13 which open on a heating surface 11a of the heating plate 11. The vacuum thin bores 13 act to suck the sheet 2, thereby to closely contact the sheet onto the heating surface 11a of the heating plate 11 with no intervening air left. The vacuum bores 13 has a diameter of 0.05 to 1.0mm, preferably, 0.05 to 0.4mm, or a width of 0.04 and a length of 0.3 to 10mm. The bores 13 are provided at intervals of 3 to 20mm. The bores 13 communicate with a vacuum tank 14.

The vacuum tank 14 preferably has a capacity more than five times the volume of the vacuum line. If the capacity is so selected, rapid and positive suction is assured.

The lower heating plate 15 also has heating sources 12 such as heaters provided therein. Although the vacuum thin bores 13 are provided only in the upper heating plate 11 in the apparatus as illustrated, they may be provided in the lower heating plate 15, too.

The vacuum thin bores 13 are formed, for example, by fine boring, precision machining, electric spark forming or another processing method using a heat source of high energy density, for example, electromagnetic wave, such as laser (solid laser, gas laser, semiconductor laser), corpuscular wave such as ion beam or electron beam.

The heating plate 11 (15) may be prepared in various ways. For example, a mirror-surfaced metal plate is used and it is processed to have a groove for ventilation on another, rear side of the metal plate and thereafter the plate is formed, by precision machining or laser processing, with bores of 0.3 to 3mm in depth at a portion corresponding to the ventilating groove to communicate with the same. Alternatively, a porous metal is used and it is subjected to surface grinding (planishing) and plating and thereafter it is again subjected to grinding (planishing) of its plated surface and boring of the plated layer by precision machining or laser processing. Or, a metal plate is first processed by laser etc. to form bores and then attached or sintered to an air-permeable material such as a sintered metal or metal fiber mesh, and further subjected to surface grinding (planishing) according to necessity. Or, metal fiber mesh having an air permeability is used and it is chrome-plated, subjected to surface grinding (planishing) and backed with a metal material having micropores.

The shape of the vacuum bores 13 is not critical and it may be circular, elliptic or elongated in diametrical section.

The heating surfaces 11a and 15a of the upper heating plate 11 and the lower heating plate 15 have a surface roughness (JIS B-0601) of 2S or less, preferably ($\hat{=} 0\mu mR_{max} \le 2S \le 2\mu mR_{max}$) 1S or less, more preferably 0.6S or less (based on the surface excepting the vacuum bores). The heating surfaces 11a, 15a of the heating plates 11, 15 are finished by planishing such as buffing, sanding, lapping or electropolishing. Preferably, the heating surface may have fine bores which allow one vacuum thin bore to communicate with another to enhance the suction and deaerating effect at a portion where the heating surface contacts the sheet.

Due to the surface roughnesses of the heating surfaces 11a, 15a which are selected to be 2S or less (preferably 1S or less) and the vacuum thin bores 13 provided on the heating surface 11a, undesirable raindrop can be prevented from being formed on the sheet when the sheet is being heated. They also prevent the sheet from turning opaque which is caused by rough-surface transferring.

The heating surfaces 11a, 15a is preferably made of a light metal, for example, aluminum. If the heating surfaces 11a, 15a are made of a light metal such as aluminum, adhesion of the sheet to the surfaces will be prevented and thermal conductivity is improved, assuring uniform heating of the sheet. In addition, the processability of the heating plate for forming the vacuum bores can be improved.

The sheet forming section 20 is formed of a top plate 21 with a plurality of plugs 22 and a bottom plate 24 with a plurality of cavities 25. The top plate 21 and the bottom plate 24 are disposed so as to oppose each other in a vertical direction and adapted to move relatively in the vertical direction with respect to each other so that they may engage with and disengage from each other. The plugs 22 are mounted on the top plate 21 so that they can move up and down independently of the top plate 21 for draping the sheet for deep-draw forming.

23 is a compressed air pipe which communicate with the inside of the top plate 21. The compressed air supplied through the pipe 23 is fed from the side of the plugs 22 and forcees the sheet 2 against the cavities 25 so as to closely contact the sheet 2 to the cavities 25 for the forming. Ventilating slots 26 communicating with the cavities 25, respectively, are provided in the bottom plate 24. The ventilating slots 26 are used to suck the sheet 2 and deaerate intervening air in the sheet forming process and to feed compressed air therethrough for releasing formed products from the cavities 25 after completion of the forming.

The cavities of the sheet forming section 20 are generally metal molds, but they may be made of another material such as plastics. Of course, only the plugs 22 of the top plate 21 or the cavities 25 of the bottom plate 24 may be made of plastics.

A forming method for a polypropylene sheet using the thermoforming apparatus as mentioned above will now be described exemplarily:

(1) The sheet 2 is intermittently fed and introduced into the thermoforming apparatus through the guide rollers 4.

(2) The sheet 2 introduced between the upper and lower heating plates 11 and 12 of the heating section 10 is held between the upper and lower heating plates 11 and 12, while being closely contacted by the heating surface 11a by being sucked through the vacuum thin bores 13. Thus, the sheet 2 is contacted with the upper and lower heating surfaces 11a, 15a and heated from its both sides. At this time, the heating plates 11 and 15 are kept at a temperature lower than a melting point of the sheet.

As described above, since the heating surfaces 11a and 15a of the heating plates 11 and 15 have a surface roughness of 2S or less and the diameter of the vacuum thin bores is selected to be 1.0mm or less (the width is selected to be 0.04mm or less when the bore has an elongated shape), it can be avoided that the sheet 2 has rain drop (air spots mark) or is turned opaque by rough surface transfer in the press heating. In addition, the heating is carried out uniformly and effectively.

(3) The sheet 2 heated at the heating section 10 is quickly fed between the top plate 21 and the bottom plate 24 of the sheet forming section 20. The top plate 21 and the bottom plate 24 are then operated to hold the heated sheet 2 therebetween. Subsequently, the plug 22 is lowered to drape the sheet 2 and compressed air is fed into the inside of the top plate 21 from the compressed air pipe 23. At the same time, deaeration (suction) of the cavities 25 are carried out through the ventilating slots 26. This forcees the sheet 2 against the cavities 25 to form the sheet 2 into containers 2a by deep drawing.

(4) The resulting formed products 2 which are formed in the shapes of containers leave the thermoforming apparatus 1 and are fed to the following step.

The present forming method is applicable to the forming of crystalline thermoplastic sheet having a thickness of 0.2 to 1.5mm and it is especially suitable for the forming of a sheet having a thickness of 0.3 to 1.0mm. As an example of the crystalline thermoplastic sheet to which the present invention is applied, there can be mentioned polyolefin such as polypropylene or polyethylene, polyester, polyamide, etc. Inter alia, polypropylene sheet having an improved transparency which is attained by quenching by water or by addition of crystal necleating agent is suitable.

According to the thermoforming method as mentioned above and with the thermoforming apparatus as mentioned above, containers excellent in transparency, gloss and form reproducibility and having good appearances can be obtained. Furthermore, uniform heating and uniform stretching can be attained, which assures good gage accuracy. In case a light metal is used for the heating surface, the heat conductivity is improved, which enables the heating to be attained in a shortened time, improving the productivity. When this method is applied to deep-draw forming using a plug, the drawing ratio of a formed product can be arbitrarily selected.

The present invention includes the following modifications within the scope (1) two or more stages of sheet heating sections may be provided; (2) the method and the apparatus of the present invention may be applied to vacuum forming or airpressure forming; (3) the entire structure of the heating plate may be made of a light metal such as aluminum; (4) another type of vacuum apparatus than the vacuum tank may be employed; and (5) the top plate and the bottom plate in the sheet forming section may be arranged upside down.

EXAMPLE

The present invention will now be described in detail, referring to examples and comparative examples.

## Example 1

0.5mm thick IDEMITSU PURE-RAY FG-100 (tradename of substantially non-oriented, transparent polypropylene sheet (tansparency: 6% in terms of haze) manufactured and sold by IDEMITSU PETROCHEMICAL CO., ltd., which is prepared by extruding polypropylene resin into sheet, quenching the same by slit-water cooling system and heat-treating the sheet at 130°C.) is formed into containers of 70mm in diameter and 22mm in depth by using a thermoforming apparatus as illustrated in Fig.1, which is a pre-stage heating-plate-heating, plug-assisted vacuum pressure forming apparatus.

Heating plates:

Material:
Aluminum
Surface roughness:
0.2 to 0.35
Heating zones:
3
Vacuum thin bores:
0.5mm in diameter Pitch: 12mm (provided only in the upper heating plate)
Vacuum apparatus:
Vacuum tank

Forming conditions:

Temp. of heating plates:
55°C (both at upper and lower heating plates)
Degree of vacuum:
700mmHg (deaerated simultaneously with sheet holding)
Forming air pressure:
$4kg/cm^2$
Number of shots:
30 shots/min

The resulting container products are excellent in transparency and gloss, free from drawing unevenness, and have a good forming reproducibility.

When a heating plate having a surface roughness of 1.2S is employed instead of the heating plate having a surface roughness of 0.2 to 0.35, the obtained product is slightly deteriorated in transparency and gloss as compared with the product obtained by the heating plate having a surface roughness of 0.2 to 0.35.

## Example 2

Substantially the same process as in Example 1 is repeated except that the diameter and the depth of the vacuum thin bores is selected to be 0.4mm and 0.5mm, respectively, and the bores are provided at a pitch of 4mm, to form containers.

The obtained containers are excellent in transparency and gloss and have a good gage uniformity.

## Comparative Example 1

Containers are formed according to a process substantially the same as that of Example 1 except that no vacuum deaeration is carried out. The resulting products have a good forming reproducibility, but the drawing is uneven and the gage is not uniform, which spoils the value as goods.

## Comparative Example 2

Containers are formed according to a process substantially the same as that of Example 1 except that steel heating plates having a surface roughness of 3S are employed. The resulting containers have a good forming reproducibility, but the transparency and gloss are poor.

## Claims

1. A thermoforming method for thermoplastic resin sheet, which is characterized in that the thermoplastic resin sheet is held between upper and lower heating plates having a surface roughness of
2S ($\hat{=}$ $0\mu mR_{max} \leq 2S \leq 2\mu mR_{max}$) or less, while being vacuum sucked at least from a side of the upper heating plate, being allowed to closely contact at least said upper heating plate, the sheet is heated at a temperature lower than a melting point of the resin and the sheet is then quickly sent to a forming section to be thermoformed at said sheet forming section.

2. A thermoforming method as claimed in claim 1, in which said thermoplastic resin sheet has a thickness of 0.2 to 1.5mm.

3. A thermoforming apparatus for thermoplastic resin sheet which comprises:
a sheet heating section including a set of upper and lower heating plates having a surface roughness of 2S or less, at least the upper heating plate having a plurality of vacuum thin bores, and a vacuum system which communicates with said vacuum thin bores;

and

a sheet forming section which is disposed after said sheet heating section.

4. A thermoforming apparatus as claimed in claim 3, wherein said heating plates are made of a porous metal material and prepared by grounding and then plating a surface of the material and boring the plated layer to form the vacuum thin bores.

5. A thermoforming apparatus as claimed in claim 3, wherein said heating plates are made of bored metal plate.

6. A thermoforming apparatus as claimed in claim 3, wherein said heating plates are made of a bored metal plate which is attached with air-permeable material such as sintered metal or metal fiber mesh.

7. A thermoforming apparatus as claimed in claim 3, wherein said heating plates are made of a bored metal plate which is sintered to an air-permeable material such as sintered metal or metal fiber mesh.

8. A thermoforming apparatus as claimed in claim 3, wherein said heating plates are made of metal fiber mesh which is backed with microporous metal material.

9. A thermoforming apparatus as claimed in claim 3, wherein said heating plates have heating surfaces made of a light metal.

10. A thermoforming apparatus as claimed in claim 9, wherein said light metal is aluminum.

**Revendications**

1. Procédé de thermoformage pour une feuille de résine thermoplastique, caractérisé en ce que la feuille de résine thermoplastique est tenue entre des plaques chauffantes supérieure et inférieure ayant une rugosité de surface de 2S ($\widehat{=}$ 0 $\mu$m Rmax $\leq$ 2S $\leq$ 2 $\mu$m Rmax) ou moins, en même temps qu'elle est aspirée par dépression par au moins une face de la plaque chauffante supérieure, la feuille pouvant entrer en contact étroit au moins avec ladite plaque chauffante supérieure, la feuille est chauffée à une température inférieure au point de fusion de la résine et la feuille est ensuite rapidement envoyée à une section de formage pour être thermoformée dans cette section de formage de la feuille.

2. Procédé de thermoformage selon la revendication 1, dans lequel ladite feuille de résine thermoplastique possède une épaisseur de 0,2 à 1,5 mm.

3. Machine de thermoformage pour une feuille de résine thermoplastique qui comprend :

une section de chauffage de la feuille comprenant un jeu de plaques chauffantes supérieure et inférieure ayant une rugosité de surface de 2S ou moins, au moins la plaque chauffante supérieure présentant une pluralité de fins perçages de dépression, et un système de dépression qui communique avec lesdits fins perçages de dépression ; et

une section de formage de la feuille qui est disposée en aval de ladite section de chauffage de la feuille.

4. Machine de thermoformage selon la revendication 3, dans laquelle lesdites plaques chauffantes sont faites d'une matière métallique poreuse et préparées par meulage puis en munissant la surface de la matière d'un revêtement électrolytique et en perçant la couche revêtue pour former les fins perçages de dépression.

5. Machine de thermoformage selon la revendication 3, dans laquelle les plaques chauffantes sont faites d'une plaque métallique perforée.

6. Machine de thermoformage selon la revendication 3, dans laquelle lesdites plaques chauffantes sont faites d'une plaque métallique perforée qui est fixée à une matière perméable à l'air telle qu'un métal fritté ou une structure réticulaire de fibres métalliques.

7. Machine de thermoformage selon la revendication 3, dans laquelle lesdites plaques chauffantes sont faites d'une plaque métallique perforée qui est frittée sur une matière perméable à l'air tel qu'un métal fritté ou une structure réticulaire de fibres métalliques.

8. Machine de thermoformage selon la revendication 3, dans laquelle lesdites plaques chauffantes sont faites d'une structure réticulaire de fibres métalliques qui est renforcée par une matière métallique microporeuse.

9. Machine de thermoformage selon la revendication 3, dans laquelle lesdites plaques chauffantes possèdent des surfaces chauffantes faites de métal léger.

10. Machine de thermoformage selon la revendication 9, dans laquelle ledit métal léger est l'aluminium.

**Patentansprüche**

1. Verfahren zum Thermoformen einer thermoplastischen Harzplatte (eines thermoplastischen Kunstharz-Flachmaterials), welches dadurch gekennzeichnet ist, daß die thermoplastische Harzplatte zwischen einer oberen und einer unteren Heizplatte mit einer Oberflächenrauhigkeit von
2S ($\hat{=}$ 0 $\mu$m Rmax ≤ 2S ≤ 2 $\mu$m Rmax) oder weniger gehalten wird, während sie durch Unterdruck zumindest von der Seite der oberen Heizplatte angesaugt wird und dabei die Möglichkeit hat, zumindest mit dieser oberen Heizplatte in engen Kontakt zu gelangen, daß die Platte auf eine Temperatur erwärmt wird, die niedriger ist als der Schmelzpunkt des Harzes und daß die Platte dann schnell an einen Formabschnitt gesandt wird, um an diesem Platten-Formabschnitt einer Thermoformung unterworfen zu werden.

2. Verfahren zum Thermoformen nach Anspruch 1, bei dem die thermoplastische Harzplatte eine Dicke von 0,2 bis 1,5 mm besitzt.

3. Vorrichtung zum Thermoformen einer thermoplastischen Harzplatte, welche umfaßt:
einen Plattenheizabschnitt mit einem Satz aus einer oberen und einer unteren Heizplatte mit einer Oberflächenrauhigkeit von 2 S oder weniger, wobei zumindest die obere Heizplatte mehrere dünne Unterdruckbohrungen aufweist und wobei ein Unterdrucksystem mit den dünnen Unterdruckbohrungen kommuniziert; und einen Plattenformabschnitt, welcher hinter dem Plattenheizabschnitt angeordnet ist.

4. Vorrichtung zum Thermoformen nach Anspruch 3, bei der die Heizplatten aus einem porösen Metallmaterial gemacht und durch Erden und anschließendes Plattieren einer Oberfläche des Materials sowie durch Bohren der aufplattierten Schicht zum Bilden der dünnen Vakuumbohrungen hergestellt ist.

5. Vorrichtung zum Thermoformen nach Anspruch 3, bei der die Heizplatten aus einer gebohrten Metallplatte gemacht sind.

6. Vorrichtung zum Thermoformen nach Anspruch 3, bei der die Heizplatten aus einer gebohrten Metallplatte gemacht sind, an welcher luftdurchlässiges Material angebracht ist, wie zum Beispiel Sintermetall oder ein Metallfasergeflecht.

7. Vorrichtung zum Thermoformen nach Anspruch 3, bei der die Heizplatten aus einer gebohrten Metallplatte gemacht sind, welche an ein luftdurchlässiges Material, wie z.B. Sintermetall oder ein Metallfasergeflecht, angesintert ist.

8. Vorrichtung zum Thermoformen nach Anspruch 3, bei der die Heizplatten aus einem Metallfasergeflecht gemacht sind, welches durch ein mikroporöses Metallmaterial abgestützt ist.

9. Vorrichtung zum Thermoformen nach Anspruch 3, bei der die Heizplatten Heizoberflächen haben, die aus einem Leichtmetall gemacht sind.

10. Vorrichtung zum Thermoformen nach Anspruch 9, bei der das Leichtmetall Aluminium ist.

EP 0 271 078 B1

# F I G.1